# EUROPEAN PATENT APPLICATION

(11) **EP 4 745 999 A1**
(43) Date of publication of application: **20.05.2026**
(21) Application number: 24839291.2
(22) Date of filing: 08.05.2024
(51) Int. Cl.: G21K 5/02, G01B 15/02, G21G 4/04, G21K 1/00

(54) **RADIATION SOURCE SHUTTER DEVICE AND MEASURING DEVICE**

(30) Priority: 12.07.2023 JP 2023114696
(71) Applicant: Yokogawa Electric Corporation, Musashino-shi, Tokyo 180-8750 (JP)
(72) Inventor: ICHIZAWA, Yasushi, Musashino-shi, Tokyo 180-8750 (JP)
(74) Representative: Winter, Brandl - Partnerschaft mbB
(86) International application number: PCT/JP2024/017132
(87) International publication number: WO 2025/013393

(57) **Abstract**

A radiation source shutter apparatus (20) includes a container (21) that has a storage space (21a) formed inside thereof, a holder (22) that is housed in the storage space (21a) and has a recess (22a) formed in an outer periphery, a radiation source capsule (23) that is inserted in the recess (22a), a bearing (24) that allows the container (21) to support the holder (22) such that the holder (22) is rotatable about a rotation axis (2) that extends so as not to overlap with an entrance (22b) of the recess (22a), where a through hole (21b) that overlaps with a part of a trajectory of the entrance (22b) of the recess (22a) at a time of rotation of the holder (22) is formed in the container (21), the bearing (24) does not overlap with an inscribed circle (3) that is virtually inscribed in the container (21) when viewed from a direction perpendicular to the rotation axis (2), a part of the inscribed circle (3) is located inside the bearing (24), and an inner diameter of the bearing (24) is smaller than a diameter of the inscribed circle (3).

## Description

### Field

The present invention relates to a radiation source shutter apparatus and a measurement apparatus.

### Background

A measurement apparatus that measures a plate thickness by using radiation is known. The measurement apparatus includes a radiation source shutter apparatus that includes a radiation source and switches between emission and shielding of the radiation source, and a detection apparatus that detects emitted radiation. By causing a measurement target object to pass between the radiation source shutter apparatus and the detection apparatus and measuring a transmission attenuation amount of radiation at the measurement target object, it is possible to calculate a plate thickness of the measurement target object.

The radiation source shutter apparatus that is included in the measurement apparatus is configured to include, for example, a container, a holder that is housed in the container, and a capsule that is held by the holder (for example, Non Patent Literature 1). A recess in which the capsule is inserted is formed in the holder. In the capsule, for example, the nuclide 85kr that emits beta-rays is enclosed. The holder that holds the capsule is rotatably supported inside the container. In the container, a through hole is formed at a specific rotation position of the holder and at a position that overlaps with the capsule. In the radiation source shutter apparatus, radiation is emitted via the through hole when the holder is rotated at the specific rotation position, and radiation is shielded by the container and not emitted at other rotation positions.

### Citation List

### Patent Literature

Non Patent Literature 1: "6-5-1-4 Safety of radio source container, Japan Electric Measuring Instruments Manufactures' Association (JEMIMA)", [online], Internet <https://www.jemima.or.jp/tech/6-05-01-04.html> [searched on 29 July 2023]

### Summary

### Technical Problem

The holder is supported by a bearing in the container. A diameter of the bearing is smaller than a size of the holder, and, in a portion in which the bearing is fitted, a thickness of a wall between the recess and an outer surface is smaller than other portions. In the portion in which the thickness of the wall is reduced, radiation shielding performance decreases. In contrast, if the bearing is located more distant from the recess to ensure the thickness of the wall, a size of the radiation source shutter apparatus increases.

An object of the present invention is to obtain a radiation source shutter apparatus that is able to ensure a thickness of a wall of a holder that is rotatably supported and reduce a size of the apparatus.

### Solution to Problem

A radiation source shutter apparatus includes a container that has a storage space formed inside thereof, a holder that is housed in the storage space and has a recess formed in an outer periphery, a radiation source capsule that is inserted in the recess, a bearing that allows the container to support the holder such that the holder is rotatable about a rotation axis that extends so as not to overlap with an entrance of the recess, where a through hole that overlaps with a part of a trajectory of the entrance of the recess at a time of rotation of the holder is formed in the container, the bearing does not overlap with an inscribed circle that is virtually inscribed in the container when viewed from a direction perpendicular to the rotation axis, a part of the inscribed circle is located inside the bearing, and an inner diameter of the bearing is smaller than a diameter of the inscribed circle. Advantageous Effects of Invention

According to the present invention, it is possible to obtain a radiation source shutter apparatus that is able to ensure a thickness of a wall of a holder that is rotatably supported and reduce a size of the apparatus.

### Brief Description of Drawings

FIG. 1 is a perspective view illustrating an overall configuration of a measurement apparatus according to a first embodiment.
FIG. 2 is a front view illustrating an overall configuration of a radiation source shutter apparatus according to the first embodiment.
FIG. 3 is a perspective view illustrating an overall configuration of the radiation source shutter apparatus according to the first embodiment.
FIG. 4 is a cross-sectional view of the radiation source shutter apparatus taken along a line IV-IV illustrated in FIG. 2.
FIG. 5 is a cross-sectional view of the radiation source shutter apparatus taken along a line V-V illustrated in FIG. 4.
FIG. 6 is a cross-sectional view of the radiation source shutter apparatus taken along the line IV-IV illustrated in FIG. 2, and is a diagram illustrating a state in which a holder is located at a shielding position.
FIG. 7 is a perspective view illustrating an internal configuration of a radiation source shutter apparatus according to a modification of the first embodiment.
FIG. 8 is a cross-sectional view of the radiation source shutter apparatus according to the modification of the first embodiment, and is a diagram corresponding to a cross-sectional view taken along the line V-V illustrated in FIG. 4.

### Description of Embodiments

A radiation source shutter apparatus and a measurement apparatus according to one embodiment of the present invention will be described in detail below with reference to the drawings. Meanwhile, the present invention is not limited by embodiments described below.

### First embodiment

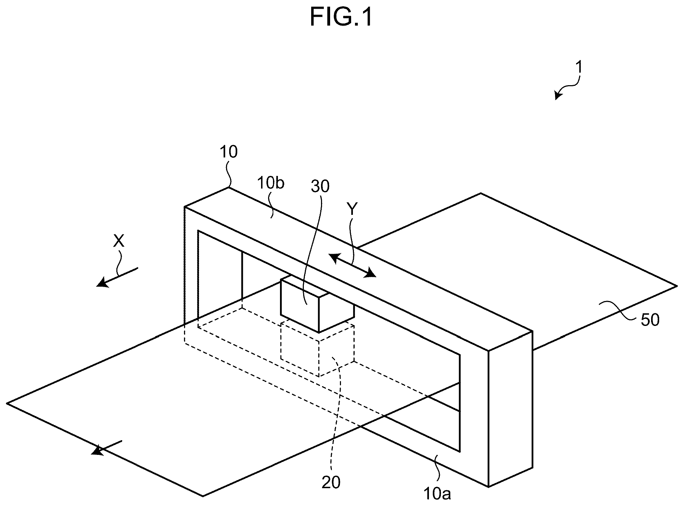

FIG. 1 is a perspective view illustrating an overall configuration of a measurement apparatus according to a first embodiment. A measurement apparatus 1 includes a frame 10, a radiation source shutter apparatus 20, and a detection apparatus 30. The frame 10 is a frame-shaped member that includes a lower frame 10a and an upper frame 10b, and the lower frame 10a and the upper frame 10b are connected to each other at respective end portions. A region between the lower frame 10a and the upper frame 10b is a measurement space for measuring a thickness of a measurement target object 50.

The radiation source shutter apparatus 20 is mounted on the lower frame 10a. The detection apparatus 30 is mounted on the upper frame 10b. A gap is provided between the radiation source shutter apparatus 20 and the detection apparatus 30, and the measurement target object 50 moves and passes through the gap in a direction indicated by an arrow X.

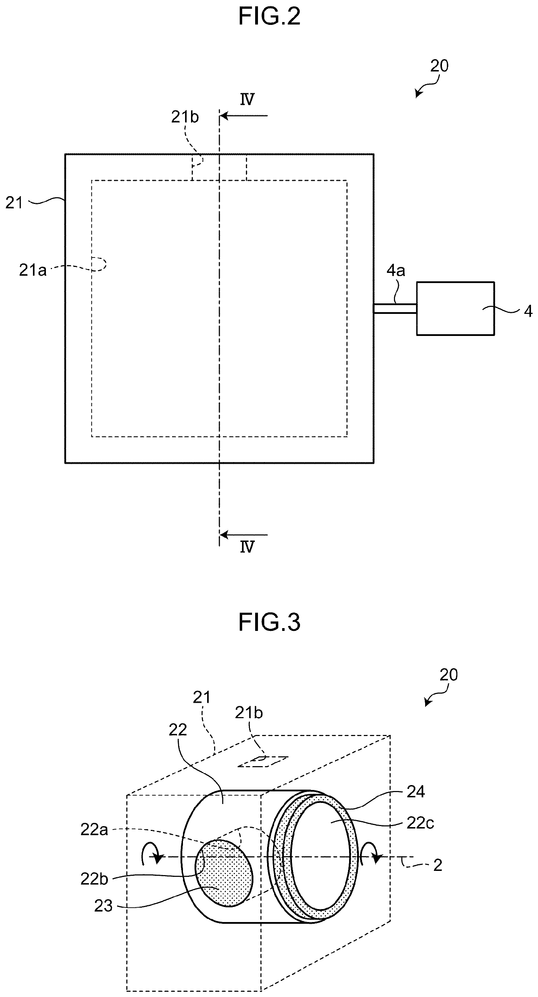

FIG. 2 is a front view illustrating an overall configuration of the radiation source shutter apparatus according to the first embodiment. FIG. 3 is a perspective view illustrating an overall configuration of the radiation source shutter apparatus according to the first embodiment.

As illustrated in FIG. 2 and FIG. 3, an outer shell of the radiation source shutter apparatus 20 is constituted of a container 21. In FIG. 3, the container 21 is indicated by a dashed line and an internal configuration of the radiation source shutter apparatus 20 is illustrated. A storage space 21a is formed inside the container 21. In the container 21, a through hole 21b that allows communication between the storage space 21a and outside is formed. The container 21 is made of a heavy metal. Examples of the heavy metal include tungsten, a tungsten alloy, cupper tungsten, lead, a lead alloy, stainless, brass, and copper.

The radiation source shutter apparatus 20 includes, in addition to the container 21, a holder 22, a radiation source capsule 23, and a bearing 24. The holder 22 is housed in the storage space 21a. Further, the holder 22 is supported so as to be rotatable about a rotation axis 2 inside the storage space 21a.

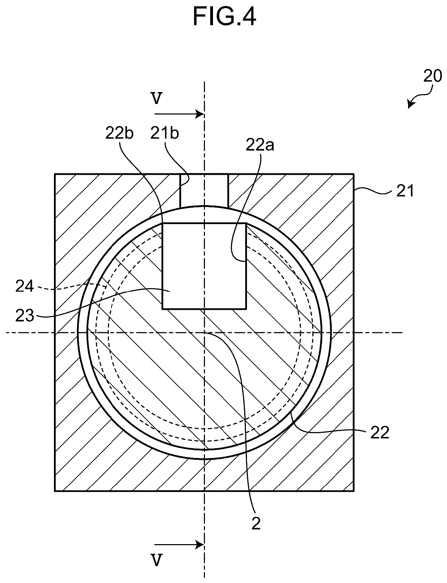

FIG. 4 is a cross-sectional view of the radiation source shutter apparatus taken along a line IV-IV illustrated in FIG. 2. In an outer periphery of the holder 22, a recess 22a that is recessed toward a center is formed. The rotation axis 2 extends so as not to overlap with an entrance 22b of the recess 22a. With this configuration, by rotating the holder 22 about the rotation axis 2, it is possible to change a location and orientation of the entrance 22b of the recess 22a. The holder 22 is made of a heavy metal. Examples of the heavy metal include tungsten, a tungsten alloy, cupper tungsten, lead, a lead alloy, stainless, brass, and copper.

The radiation source capsule 23 serves as a radiation source that emits radiation. The radiation source capsule 23 is, for example, an airtight container in which a radioactive gas is sealed. For example, a radioactive gas is the nuclide 85kr that emits beta-rays. For example, the airtight container is a capsule that is made of beryllium. The radiation source capsule 23 is housed in the recess 22a that is formed in the holder 22. The holder 22 is made of the heavy metal, and therefore, most of radiation that is emitted from the radiation source capsule 23 is not able to transmit through the holder 22. In contrast, at the entrance 22b of the recess 22a, the radiation source capsule 23 is not covered by the heavy metal; therefore, radiation is emitted from the entrance 22b. As described above, the location and the orientation of the entrance 22b are changed with rotation of the holder 22, so that a location and orientation at which the radiation is emitted are changed with rotation of the holder 22.

The through hole 21b that is formed in the container 21 that houses the holder 22 is formed at a position that partly overlaps with a trajectory of the entrance 22b that moves with rotation of the holder 22. The container 21 is made of the heavy metal, and therefore, radiation that is emitted from the entrance 22b is not able to transmit through the container 21. Therefore, only when the holder 22 is located at a rotation position at which the entrance 22b and the through hole 21b overlap with each other, radiation is emitted to the outside of the container 21 via the through hole 21b. In the description below, the rotation position of the holder 22 at the time the radiation is emitted will be referred to as an emission position.

In contrast, when the holder 22 is located at a rotation position at which the entrance 22b and the through hole 21b do not overlap with each other, radiation is shielded by the holder 22 and is not emitted from the container 21. In the description below, a rotation position of the holder 22 at the time the radiation is not emitted will be referred to as a shielding position. Meanwhile, to protect the radiation source capsule 23, the through hole 21b may be covered by a material that can transmit radiation. For example, the through hole 21b may be covered by a resin film on which aluminum is vapor-deposited.

Meanwhile, the radiation occurs in the process of natural decay of the radionuclide that is enclosed in the radiation source capsule 23. It is difficult to prevent the natural decay of the radionuclide, and therefore, it is impossible to stop the natural decay to stop emission of radiation. Therefore, as described above, in the radiation source shutter apparatus 20, the radiation source capsule 23 is housed in the recess 22a of the holder 22 and radiation is emitted only at the radiation position at which the entrance 22b of the recess 22a overlaps with the through hole 21b to control emission and shielding of the radiation.

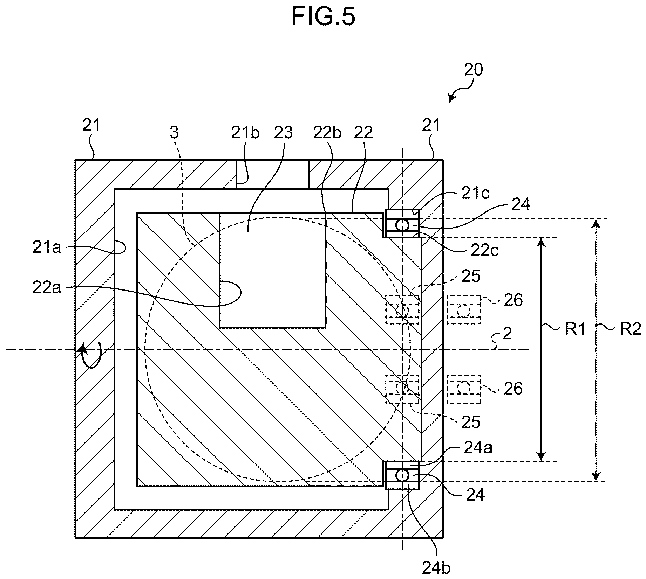

FIG. 5 is a cross-sectional view of the radiation source shutter apparatus taken along a line V-V illustrated in FIG. 4. The bearing 24 is a rolling bearing that includes an outer ring 24a and an inner ring 24b that are able to rotate relative to each other. As illustrated in FIG. 5, the container 21 and the holder 22 are connected to each other via the bearing 24, so that the holder 22 is rotatably supported inside the storage space 21a. The holder 22 has a cantilever structure that is supported by the single bearing 24.

In the container 21, a recess 21c in which the outer ring 24a is fitted is formed. In the holder 22, a protrusion 22c that fits the inner ring 24b is formed. Here, a circular shape that is virtually inscribed in the holder 22 when viewed from a direction perpendicular to the rotation axis 2 is defined as an inscribed circle 3.

The bearing 24 is formed so as to have a diameter that does not overlap with the inscribed circle 3. Further, the bearing 24 is arranged such that a part of the inscribed circle 3 is located inside the inner ring 24b. Further, an inner diameter R1 of the bearing 24 (an inner diameter of the inner ring 24b) is smaller than a diameter R2 of the inscribed circle 3.

A driving unit 4 is mounted on the radiation source shutter apparatus 20. The driving unit 4 is, for example, an electric motor, and a drive shaft 4a is connected to the holder 22. The drive shaft 4a extends coaxially with the rotation axis 2. With rotation of the drive shaft 4a of the driving unit 4, the holder 22 rotates about the rotation axis 2.

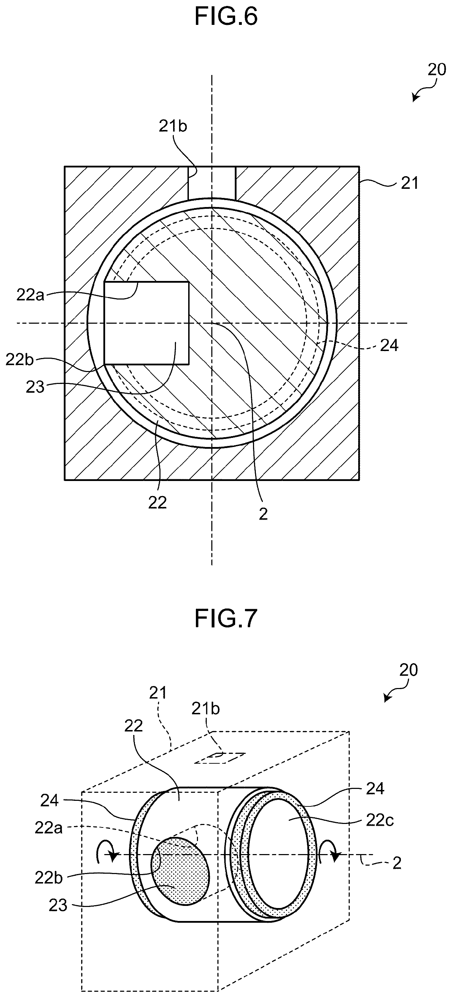

FIG. 6 is a cross-sectional view of the radiation source shutter apparatus taken along the line IV-IV illustrated in FIG. 2, and is a diagram illustrating a state in which the holder is located at the shielding position. Meanwhile, in the same cross-sectional view illustrated in FIG. 4, a state in which the holder 22 is located at the emission position is illustrated.

In the radiation source shutter apparatus 20, the holder 22 is switched between the emission position (see FIG. 4) and the shielding position (see FIG. 6) by the driving unit 4, and is switched between a radiation emitting state and a radiation non-emitting state.

Referring back to FIG. 1, the radiation source shutter apparatus 20 is mounted on the lower frame 10a of the frame 10 such that the through hole 21b is oriented toward the detection apparatus 30.

The detection apparatus 30 detects an amount of radiation that is emitted from the radiation source shutter apparatus 20. The detection apparatus 30 transmits the detected amount of radiation to a control apparatus (not illustrated). The detection apparatus is mounted on the upper frame 10b of the frame 10 such that a detection unit (not illustrated) that detects radiation is oriented toward the radiation source shutter apparatus 20.

The radiation source shutter apparatus 20 and the detection apparatus 30 move along a longitudinal direction (direction indicated by an arrow Y) of the lower frame 10a and the upper frame 10b while facing each other. By moving the radiation source shutter apparatus 20 and the detection apparatus 30 while causing the measurement target object 50 to pass through the gap between the radiation source shutter apparatus 20 and the detection apparatus 30, it is possible to allow radiation to transmit through the measurement target object 50 in a wide range and measure the measurement target object 50.

The measurement target object 50 is, for example, an electrode sheet that is used for a battery. For example, as an electrode sheet used for a positive electrode, a top surface of an aluminum foil is thinly and evenly coated with a slurry, and is dried in a subsequent process. After the drying, a back surface of the aluminum foil is subjected to the same coating and drying. In inspection during the process of coating and drying, measurement of a basis weight (coating basis weigh), measurement of a shape of an end face (edge) of the coated portion, image diagnosis on a dried surface condition, or the like is performed.

The measurement apparatus 1 according to the first embodiment measures a basis weigh (coating basis weight) of the measurement target object 50. At the time of the measurement, the radiation source shutter apparatus 20 in which the holder 22 is located at the emission position emits radiation toward the measurement target object 50. From the amount of radiation that is detected by the detection apparatus 30, an attenuation amount of radiation due to transmission through the measurement target object 50 is calculated. The basis weight of the measurement target object 50 is calculated by comparison with a reference attenuation amount that is obtained in advance by measuring amounts of attenuation of a plurality of samples for which basis weights are already known. At times other than the measurement of the measurement target object 50, the holder 22 is located at the shielding position and radiation is not emitted from the radiation source shutter apparatus 20.

The radiation source shutter apparatus 20 needs to prevent radiation leak at times other than the measurement of the measurement target object 50. Further, when fire occurs, it is needed to prevent radiation leak due to exposure of the capsule. A function to prevent radiation leak is largely dependent on a thickness of a wall of the holder 22.

As illustrated in FIG. 5, the bearing 24 does not overlap with the inscribed circle 3 in the holder 22. For example, as represented by a virtual bearing 25 indicated by a dash-double-dot line in FIG. 5, when a bearing with a smaller diameter than the bearing 24 is used, the virtual bearing 25 and the inscribed circle 3 overlap with each other. When the virtual bearing 25 and the inscribed circle 3 overlap with each other, a thickness of the wall of the holder 22 is reduced in a portion in which the virtual bearing 25 is fitted. Therefore, the portion in which the thickness of the wall is reduced becomes a vulnerability when preventing the radiation leak. To cope with this, to ensure the thickness of the wall even for a bearing with a small diameter, if a bearing, such as a virtual bearing 26 indicated by a dash-double-dot line in FIG. 5, is arranged at a position that does not overlap with the inscribed circle 3, a size of the holder 22 increases.

In contrast, in the radiation source shutter apparatus 20 of the first embodiment, the bearing 24 has a larger diameter than the virtual bearing 25 and does not overlap with the inscribed circle 3; therefore, it is possible to ensure the thickness of the wall of the holder 22 and it is possible to infallibly prevent radiation leak or the like. Furthermore, a part of the inscribed circle 3 is located inside the bearing 24, so that it is possible to reduce the size of the holder 22 in a direction along the rotation axis 2.

Moreover, the inner diameter R1 of the bearing is smaller than the diameter R2 of the inscribed circle 3, so that it is possible to reduce the size of the holder 22 even in the direction perpendicular to the rotation axis 2. By reducing the size of the holder 22, it is possible to reduce a size of the radiation source shutter apparatus 20.

As described above, in the radiation source shutter apparatus 20 of the first embodiment, it is possible to ensure the thickness of the entire wall, prevent radiation leak, and reduce the size of the apparatus. With the reduction of the size, it is possible to reduce a weight of the radiation source shutter apparatus 20. With the reduction of the size of the radiation source shutter apparatus 20, it is possible to reduce a size and a weight of an actuator or the like that drives the radiation source shutter apparatus 20 in the measurement apparatus 1. Consequently, it is possible to reduce a size and a weight of the measurement apparatus 1.

Meanwhile, the radiation source shutter apparatus 20 may be mounted on the upper frame 10b and the detection apparatus 30 may be mounted on the lower frame 10a as long as the radiation source shutter apparatus 20 and the detection apparatus 30 are arranged so as to face each other. Furthermore, the outer ring 24a of the bearing 24 may be fitted to the holder 22 and the inner ring 24b may be fitted to the container 21.

### Modification

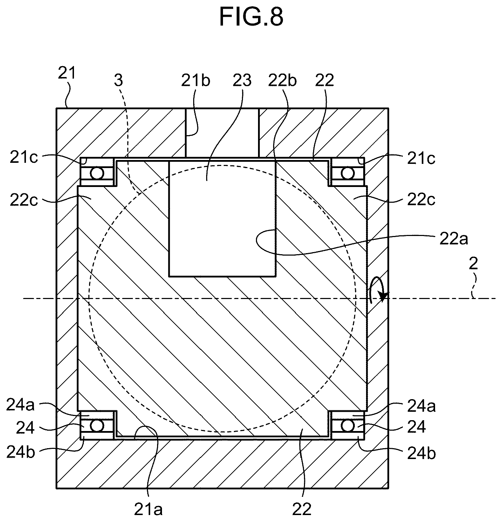

FIG. 7 is a perspective view illustrating an internal configuration of a radiation source shutter apparatus according to a modification of the first embodiment. FIG. 8 is a cross-sectional view of the radiation source shutter apparatus according to the modification of the first embodiment, and is a diagram corresponding to a cross-sectional view taken along the line V-V illustrated in FIG. 4.

In the radiation source shutter apparatus 20 according to the modification, the bearings 24 are arranged on both sides of the holder 22. Specifically, the holder 22 has a two-sided support structure that is supported by the two bearings 24 from both sides. With increase in the number of the bearings 24, a configuration becomes complicated and a processing cost of the holder 22 increases; however, it is possible to more stably support the holder 22 due to the structure in which the holder 22 is supported by the bearings 24 on both sides.

### Others

Examples of combinations of disclosed technical features will be described below.
(1) A radiation source shutter apparatus includes a container that has a storage space formed inside thereof, a holder that is housed in the storage space and has a recess formed in an outer periphery, a radiation source capsule that is inserted in the recess, a bearing that includes an inner ring and an outer ring that are arranged so as to be able to rotate relative to each other, where one of the inner ring and the outer ring is connected to the container and another one of the inner ring and the outer ring is connected to the holder, and that allows the container to support the holder such that the holder is rotatable about a rotation axis that extends so as not to overlap with an entrance of the recess, wherein a through hole that overlaps with a part of a trajectory of the entrance of the recess at a time of rotation of the holder is formed in the container, the bearing is arranged so as not to overlap with an inscribed circle that is a circular shape virtually inscribed in the container, a part of the inscribed circle is located inside the bearing, and a part of an outer edge of the inscribed circle overlaps with the bearing when viewed along the rotation axis.
(2) The radiation source shutter apparatus described in (1), wherein the single bearing is arranged.
(3) The radiation source shutter apparatus described in (1), wherein the two bearings are arranged across the holder.
(4) The radiation source shutter apparatus described in any one of (1) to (3), wherein the holder is made of a heavy metal.
(5) The radiation source shutter apparatus described in (4), wherein the heavy metal is one of tungsten, a tungsten alloy, cupper tungsten, lead, a lead alloy, stainless, brass, and copper.
(6) A measurement apparatus includes the radiation source shutter apparatus described in any one of (1) to (5), a driving apparatus that rotates the holder, a radiation detection apparatus that is arranged so as to face the through hole of the radiation source shutter apparatus while forming a gap with the radiation source shutter apparatus, and a frame to which the radiation source shutter apparatus and the radiation detection apparatus are fixed.

### Reference Signs List

- 1: measurement apparatus
- 2: rotation axis
- 3: inscribed circle
- 4: driving unit
- 4a: drive shaft
- 10: frame
- 10a: lower frame
- 10b: upper frame
- 20: radiation source shutter apparatus
- 21: container
- 21a: storage space
- 21b: through hole
- 21c: recess
- 22: holder
- 22a: recess
- 22b: entrance
- 22c: protrusion
- 23: radiation source capsule
- 24: bearing
- 24a: outer ring
- 24b: inner ring
- 25, 26: virtual bearing
- 30: detection apparatus
- 50: measurement target object

## Claims

1. A radiation source shutter apparatus comprising:
a container that has a storage space formed inside thereof;
a holder that is housed in the storage space and has a recess formed in an outer periphery;
a radiation source capsule that is inserted in the recess; and
a bearing that allows the container to support the holder such that the holder is rotatable about a rotation axis that extends so as not to overlap with an entrance of the recess, wherein
a through hole that overlaps with a part of a trajectory of the entrance of the recess at a time of rotation of the holder is formed in the container,
the bearing does not overlap with an inscribed circle that is virtually inscribed in the container when viewed from a direction perpendicular to the rotation axis,
a part of the inscribed circle is located inside the bearing, and
an inner diameter of the bearing is smaller than a diameter of the inscribed circle.

2. The radiation source shutter apparatus according to claim 1, wherein the single bearing is arranged.

3. The radiation source shutter apparatus according to claim 1, wherein the two bearings are arranged across the holder.

4. The radiation source shutter apparatus according to claim 1, wherein the holder is made of a heavy metal.

5. The radiation source shutter apparatus according to claim 4, wherein the heavy metal is one of tungsten, a tungsten alloy, cupper tungsten, lead, a lead alloy, stainless, brass, and copper.

6. A measurement apparatus comprising:
the radiation source shutter apparatus according to claim 1;
a driving apparatus that rotates the holder;
a radiation detection apparatus that is arranged so as to face the through hole of the radiation source shutter apparatus while forming a gap with the radiation source shutter apparatus; and
a frame to which the radiation source shutter apparatus and the radiation detection apparatus are fixed.
